# EUROPÄISCHE PATENTSCHRIFT

(11) **EP 1 131 228 B1**
(45) Veröffentlichungstag und Bekanntmachung des Hinweises auf die Patenterteilung: **19.01.2005**
(21) Anmeldenummer: 99963257.3
(22) Anmeldetag: 19.11.1999
(51) Int. Cl.: B60R 16/02, G01C 21/36

(54) **FAHRZEUGKOMMUNIKATIONSSYSTEM UND VERFAHREN ZUM AUSTAUSCH VON DATEN IN EINEM FAHRZEUG**
MOTOR VEHICLE COMMUNICATION SYSTEM AND METHOD FOR EXCHANGING DATA IN A MOTOR VEHICLE
SYSTEME DE COMMUNICATION DE VEHICULE ET PROCEDE PERMETTANT D'ECHANGER DES DONNEES DANS UN VEHICULE

(30) Priorität: 20.11.1998 DE 19853665
(43) Veröffentlichungstag der Anmeldung: 12.09.2001
(73) Patentinhaber: SIEMENS AKTIENGESELLSCHAFT, 80333 München (DE); DaimlerChrysler AG, 70546 Stuttgart (DE)
(72) Erfinder: HÖSS, Konrad, 92331 Parsberg (DE); FOERSTER, Robert, 93086 Wörth (DE); SCHNEIDER, Jutta, Dr., 72076 Tübingen (DE); SCHNEIDER, Sandra, 70499 Stuttgart (DE); DAUNER, Oskar, 73732 Esslingen (DE); GÖBEL, Fridjof, 74354 Besigheim (DE)
(86) Internationale Anmeldenummer: PCT/DE1999/003697
(87) Internationale Veröffentlichungsnummer: WO 2000/031606

(56) Entgegenhaltungen:
- EP-A- 0 836 167
- PATENT ABSTRACTS OF JAPAN vol. 1999, no. 01, 29. Januar 1999 (1999-01-29) & JP 10 275298 A (TOYOTA MOTOR CORP;DENSO CORP), 13. Oktober 1998 (1998-10-13)

## Beschreibung

Die Erfindung betrifft ein Fahrzeugkommunikationssystem und ein Verfahren zum Austausch von Daten in einem Fahrzeug, bei dem Daten zwischen mehreren unterschiedlichen, mit wenigstens einer Recheneinheit verbundenen Datenquellen und mehreren mit der Recheneinheit verbundenen Bedienplätzen ausgetauscht werden.

Aus der Offenlegungsschrift DE 196 25 002 A1 ist gemäß dem Oberbegriff des Anspruchs 1 ein Fahrzeugkommunikationssystem mit einem Zentralrechner zur Durchführung von Telematik-Applikationen und mit Schnittstellen bekannt, über welche Geräteeinheiten zum Senden und Empfangen von Daten mit dem Zentralrechner verbindbar sind. Die Geräteeinheiten sind den verschiedenen Telematik-Applikationen flexibel steuerbar zugeordnet. Mit diesem System kann ein Benutzer flexibel auf unterschiedliche Telematik-Applikationen zugreifen.

In der Zeitschrift mot, Heft-Nr. 21/1997, Seiten 20 bis 21, wird ein Internet-Multimedia-System in einem Personenkraftwagen vorgestellt, bei dem ein Fahrer auf externe Informationsdienste Zugriff hat. Für Passagiere im Fahrzeugfond sind Flachbildschirme für interaktive Spiele vorgesehen. Über einen Audio/Video-Schalter können im Fahrzeug vorhandene Funktionen auf den Bildschirmen, auf Lautsprechern oder Kopfhörern ausgegeben werden.

Aus der Patentanmeldung WO 97/03399 ist ein Verfahren bekannt, bei dem der Benutzer eines vernetzten Computers eine Liste der für ihn in einem Computernetzwerk verfügbaren Anwendungsprogramme auf seiner Bedienoberfläche erhält.

Die Patentschrift US 5,655,081 betrifft ein Computernetzwerk, in dem unterschiedliche Computertypen miteinander verbunden sein können. Auf jedem Server des Computersystems läuft eine Software, die dessen Ressourcen und Anwendungen überwacht. Über die Software der einzelnen Server des Computersystems erhält eine auf einem Computer des Systems installierte Verwaltungssoftware eine Aufstellung aller im gesamten System vorhandenen Ressourcen und Anwendungen sowie deren Status.

Aus der Patentanmeldung EP 0 625 838 A2 ist ein Token-Ring-Netzwerk bekannt, das Workstations aufweist, auf denen sowohl konventionelle Anwendungsprogramme als auch Multimedia-Anwendungsprogramme laufen. Letztere verhalten sich in der Regel nicht tolerant gegenüber Verzögerungen beim Datenaustausch. Aus diesem Grund kennt das Netzwerk drei Prioritätsniveaus. Vor dem Start einer Multimedia-Anwendung wird geprüft, ob das Netzwerk einen genügend hohen Datendurchsatz bereitstellen kann.

Die internationale Patentanmeldung WO 98/26958 betrifft ein Fahrzeugkommunikationssystem mit einem fehlerresistenten steuersystem, das unterschiedliche Komponenten integriert. Eine Master-Steuereinheit verwaltet den Datenfluß zwischen den Komponenten über einen Bus. Die Master-Steuereinheit wird mit einem konfigurierbaren Windows-Betriebssystem betrieben. Eine sekundäre Steuereinheit ist mit mehreren Datenquellen und mehreren Bedienplätzen verbunden. Die sekundäre Steuereinheit dient als Server für mehrere Clients in Form von tragbaren Spiele-Computern.

Aus der internationalen Patentanmeldung WO 98/34812 ist eine Multimedia-Einheit für ein Automobil bekannt, bei der ein Benutzer eine Option aus einer Vielzahl von auf einem Bildschirm dargestellten Optionen auswählen kann.

Aus dem Patent EP 0 547 052 B1 ist eine adaptive Anzeige für Fahrzeuge bekannt, bei der Informationen klassifiziert und entsprechend ihrer Wichtigkeit auf einem Bildschirm dargestellt werden.

In der Offenlegungsschrift DE 197 43 249 A1 wird eine Navigationsvorrichtung offenbart, die bei Vorliegen einer Vielzahl von Informationen eine Auswahl für den Fahrer trifft. Die Auswahl wird durch eine definierte Prioritätsreihenfolge bestimmt.

Es ist ein Ziel der Erfindung, ein Fahrzeugkommunikationssystem und ein Verfahren zum Austausch von Daten in einem Fahrzeug bereitzustellen, bei denen mehrere Bedienplätze unterschiedlich konfiguriert und damit auf die Bedürfnisse oder Wünsche unterschiedlicher Fahrzeuginsassen individuell eingestellt werden können.

Dieses Ziel wird mit einem Fahrzeugkommunikationssystem und einem Verfahren erreicht, wie sie in den unabhängigen Patentansprüchen definiert sind. Vorteilhafte Ausführungsformen der Erfindung sind in den Unteransprüchen angegeben.

Durch das Vorsehen einer zentralen Systemsteuerung können den einzelnen Bedienplätzen individuelle und unterschiedliche Zugriffsrechte auf die Applikationen eingeräumt werden. Die zentrale Systemsteuerung ist in einem Zentralrechner oder in einer anderen Recheneinheit des Fahrzeugkommunikationssystems realisiert. Dabei kann die Rangordnung, die einem Bedienplatz zukommt, entweder einheitlich für alle Applikationen oder einzeln für jede Applikation festgelegt werden. Beispielsweise kann dem Bedienplatz des Fahrzeugführers bezüglich einer Navigationseinrichtung die höchste Priorität eingeräumt werden, wohingegen dem Fahrzeugführer ein Zugriffsrecht auf einen Fernsehempfänger völlig oder nur während der Fahrt verweigert sein kann. Zudem kann die zentrale Systemsteuerung eine Zuordnung von Ausgabeeinrichtungen zu Bedienplätzen vornehmen.

Mittels der Bedienplatzsteuerung läßt sich jeder Bedienplatz individuell konfigurieren. Eine solche Konfiguration ist denkbar bezüglich der Benutzerführung an der Mensch-Maschine-Schnittstelle, der Zuordnung von laufenden Applikationen oder deren Menüs auf die definierte Positionen einer Anzeigeeinrichtung, des Zugriffsrechts von Applikationen auf eine Ausgabeeinrichtung des Bedienplatzes oder dergleichen.

In einer besonders bevorzugten Ausführungsform sind einer Applikation mehrere Funktionen zugeordnet. Bei der Applikation kann es sich beispielsweise um eine Anwendung wie Fahrzeugnavigation handeln. Dieser Applikation sind die Funktionen Routenberechnung, Leitinformationsberechnung, Positionsbestimmung mittels GPS (Global Positioning System), Positionsbestimmung mittels Koppelnavigation und optische sowie akustische Leitinformationsausgabe zugeordnet. Eine ausführbare Funktion kann innerhalb eines Geräts mittels Hardware oder Software realisiert sein. Eine Applikation kann auf Funktionen zurückgreifen, die von unterschiedlichen Geräten ausgeführt werden.

Vorzugsweise weist jede Funktion eine Softwareschnittstelle zum Datenaustausch mit anderen Software- oder Hardware-Schnittstellen auf.

In einer besonders vorteilhaften Ausführungsform weist die zentrale Systemsteuerung ein zentrales Prioritätenmanagement auf. Ein Aspekt des zentralen Prioritätenmanagements kann beispielsweise die Zuordnung von Zugriffsrechten für die Bedienplätze auf einen Datenbus und/oder zu Applikationen sein. Ein weiterer Aspekt des zentralen Prioritätsmanagements kann die Zuordnung von Zugriffsrechten für Applikationen auf den Datenbus oder auf Bedienplätze sein. Beim Zusammentreffen mehrerer mit Prioritäten behafteter Aktionen (z. B. zwei Bedienplätze mit bestimmten Prioritäten fordern Applikation mit bestimmten Prioritäten auf demselben physikalischen, nicht mehrplatzfähigen Gerät an) löst das zentrale Prioritätenmanagement eventuell auftretende Konflikte zugunsten von einer der Aktionen. Dabei ist auch der Zeitrang der Aktion ein geeignetes Entscheidungskriterium.

Vorzugsweise wird bei Erreichen der Kapazitätsgrenze oder einer definierten Schwelle die Datenübertragung einer niederrangigen Applikation zugunsten einer höherrangigen Applikation unterbrochen oder deren Datenübertragungsrate reduziert. Auf diese Weise ist gewährleistet, daß beispielsweise bei einem Unfall ein automatischer Notruf abgesetzt werden kann, obwohl die Übertragungskapazität des Busses vollständig von anderen Applikationen beansprucht wird.

In einem Konfliktfall, bei dem eine Applikation beendet werden müßte oder deren Datenübertragung reduziert werden müßte, um einer weiteren Applikation einen Zugriff auf den Datenbus einzuräumen, kann eine Wichtung der Zugriffsrechte aus einem Prioritätsrecht einer Applikation und dem Prioritätsrecht desjenigen Bedienplatzes gewonnen werden, der auf die Applikation zugreift. Die Wichtung kann mit Wertungsfaktoren berechnet werden, die in einer Matrix in einem Speicherbereich der Recheneinheit abgelegt sind.

In einer besonders bevorzugten Ausführungsform ist die graphische Benutzeroberfläche eines Bedienplatzes für die unterschiedlichen Anforderungen eines besonders gewandten Benutzers, eines weniger gewandten Benutzers und eines Kindes mittels Voreinstellungen anpaßbar. So stehen beispielsweise für das Kind lediglich aussagekräftige Symbole ohne Beschriftung zur Verfügung, für den weniger gewandten Benutzer ein sehr ausführliches Menü mit Untermenüs und für den gewandten Benutzer knappe Menüs und Tastaturkürzel.

Weitere Merkmale, Vorteile und Anwendungsmöglichkeiten der Erfindung ergeben sich aus der nachfolgenden Beschreibung von Ausführungsbeispielen in Verbindung mit den Zeichnungen. Es zeigen:
- Figur 1: eine schematische Übersicht über Bestandteile eines Fahrzeugkommunikationssystems,
- Figur 2: eine schematische Darstellung einer auf das Fahrzeugkommunikationssystem verteilten Applikation, und
- Figur 3: eine auf einem Bildschirm wiedergegebene Benutzeroberfläche.

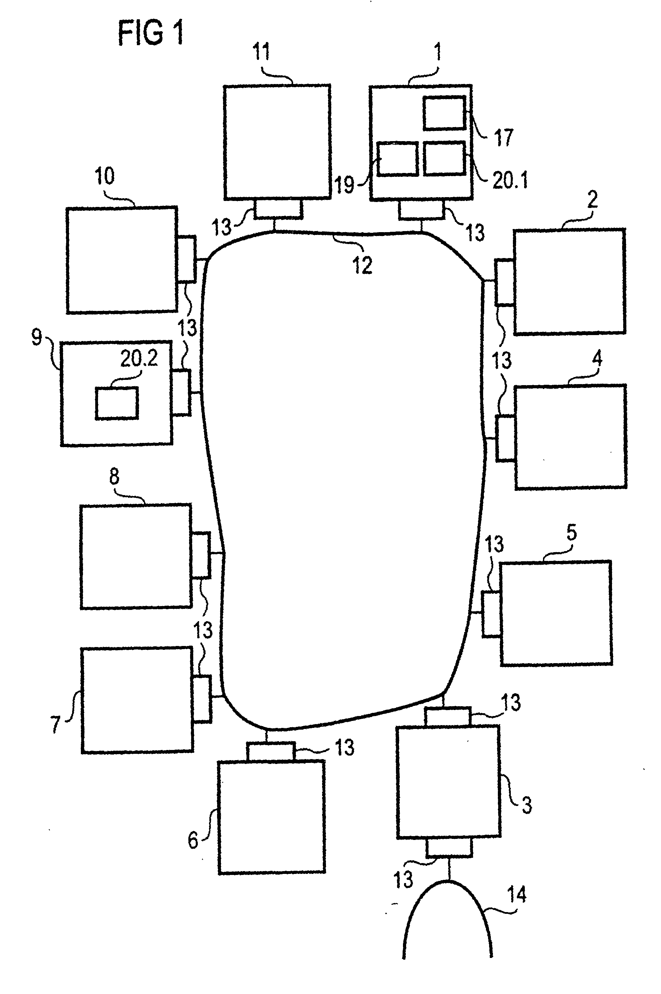

Figur 1 veranschaulicht ein Fahrzeugkommunikationssystem in einem Personenkraftwagen mit einer Vielzahl von Datenquellen und Datensenken. Es weist eine Recheneinheit 1 mit einem frei verfügbaren Speicher und einem Betriebssystem, ein Navigationsgerät 2, ein Gateway 3 zur Herstellung einer Verbindung zu einem als Can-Bus 14 ausgebildeten weiteren Fahrzeugbus, ein Audiosystem 4 zur Ausgabe von akustischen Signalen, einen Tuner 5 zum Empfang von Radio- oder Fernsehsignalen und ein Wiedergabegerät 6 für DVD- (Digital Versatile Disc) und CD-Medien (Compact Disc) auf. Ferner umfaßt das Fahrzeugkommunikationssystem eine Schnittstelle 7 für den Anschluß von Geräten eines Benutzers, beispielsweise eines tragbaren Computers, eines PDA (personal digital assistent), eines CD-Spielers oder dergleichen. Die Schnittstelle 7 weist sowohl einen drahtgebundenen Anschluß als auch einen Sender und Empfänger zum drahtlosen Datenaustausch auf. Der drahtlose Datenaustausch erfolgt über Infrarot nach dem IRDA-Standard.

Weiter weist das Fahrzeugkommunikationssystem ein Mobiltelefonmodul 8 und mehrere Bedienplätze auf, von denen lediglich ein Bedienplatz 9 beispielhaft dargestellt ist. Ein Bedienplatz 9 weist jeweils Eingabeeinheiten und Ausgabeeinheiten auf, beispielsweise eine Tastatur, einen Trackball, ein Mikrofon für eine Sprachaufzeichnung oder als Eingabemittel für ein Sprachbediensystem 10, Lautsprecher, Kopfhörer und eine Anzeigeeinrichtung 31.

Ein Ortungsmodul 11 umfaßt einen GPS-Empfänger, ein Gyroskop und einen Entfernungsmesser.

Alle Systeme sind über eine einheitlich aufgebaute Hardware-Schnittstelle 13 mit einem gemeinsamen Datenbus 12 verbunden.

Das Kommunikationssystem wird zur Ausführung von Applikationen, Funktionen und Diensten verwendet. Es kann über das Mobiltelefonmodul 8 auf externe Telematikdienste und das Internet zugreifen.

Eine Applikation umfaßt mindestens eine Funktion die das Erbringen von Leistungen für den Benutzer ermöglicht. Eine Funktion wird jeweils in einer einzigen Geräteeinheit ausgeführt.

Mit der Recheneinheit 1 sind eine zentrale Systemsteuerung 17, eine Bedienplatzsteuerung 20 und ein Prioritätenmanagement 19 realisiert. Das Prioritätenmanagement 19 weist Module auf, die der zentralen Systemsteuerung 17 funktional zugeordnet sind, und weist Module auf, die der Bedienplatzsteuerung 20 funktional zugeordnet sind.

Über das Prioritätenmanagement 19 kann jedem Bedienplatz 9 jeweils eine Priorität, entweder bezogen auf das gesamte Fahrzeugkommunikationssystem oder bezogen auf die einzelnen Applikationen, eingeräumt werden. Ferner regelt das Prioritätenmanagement 19 Zugriffe der einzelnen Applikationen auf den Datenbus und auf die einzelnen Bedienplätze 9.

Zweckmäßigerweise ist das Prioritätenmanagement 19 modular organisiert. Das Prioritätenmanagement 19 weist ein systembezogenes Prioritätenmanagementmodul, das die Zugriffe der einzelnen Bedienplätze 9 auf die im Fahrzeugkommunikationssystem vorhandenen Applikationen steuert, sowie ein busbezogenes Prioritätenmanagementmodul auf, das die Zugriffe und Zugriffswünsche der Applikationen auf den Datenbus 12 steuert. Neben diesen beiden Modulen, die funktional der zentralen Systemsteuerung 17 zugeordnet sind, weist das Prioritätenmanagement 19 ein bedienplatzbezogenes Prioritätenmanagementmodul auf, und genauer ein bedienplatzbezogenes Prioritätenmanagementmodul für jeden Bedieplatz 9. Das bedienplatzbezogene Prioritätenmanagementmodul ist der Bedienplatzsteuerung 20 funktional zugeordnet.

Das busbezogene Prioritätenmanagementmodul verhindert eine Überlastung des Datenbusses 12, um für alle gerade aktiven Applikationen eine ausreichende Datenübertragungsqualität zu gewährleisten. Im Falle einer drohenden Überlastung des Datenbusses 12 wird eine neue Applikation oder Anwendung nur zugelassen, wenn gleichzeitig durch geeignete Maßnahmen entsprechende freie Buskapazitäten geschaffen werden können. Insbesondere bei einem Zugriff einer hochrangigen Applikation, wie einer Stauwarnung für den Fahrzeugführer, werden eine oder mehrere niederrangigere Applikation beendet oder deren Datenübertragung reduziert. Ebenso können Aktionen und Applikationen von niederrangig eingestuften Bedienplätzen beendet oder reduziert werden. Letzteres kann bedeuten, daß das busbezogene Prioritätenmanagementmodul die Qualität einer Video-übertragung verringert, um das Datenaufkommen auf dem Datenbus 12 zu reduzieren.

Das busbezogene Prioritätenmanagementmodul berücksichtigt insbesondere, daß bestimmte Daten von Applikationen, beispielsweise ein Telefongespräch, ohne Verzögerung in Echtzeit übertragen werden müssen.

Zusätzlich sorgt das busbezogene Prioritätenmanagementmodul dafür, daß die Buskapazität nur bis zu einer definierten Schwelle belegt ist, so daß genügend Übertragungskapazität für besonders hochrangige Applikationen, beispielsweise das automatische oder manuelle Absetzen eines Notrufs über das Mobiltelefonmodul 8, zur Verfügung steht.

Das busbezogene Prioritätenmanagementmodul ist konfigurierbar, um diejenigen Nutzer, Applikationen oder Aktionen zu bestimmen, die im Falle einer zu hohen Buslast abgeschaltet werden, deren Datenübertragung verzögert oder in der Übertragungsqualität verschlechtert wird.

Das Prioritätenmanagement 19 umfaßt ferner einen Prioritätenmaster, der Konflikte zwischen einzelnen Modulen des Prioritätenmanagements löst. Dabei ist der Prioritätenmaster dem systembezogenen, dem bedienplatzbezogenen und dem busbezogenen Prioritätenmanagementmodul übergeordnet. Eine über dem systembezogenen Prioritätenmanagementmodul getroffene Voreinstellung genießt dabei wiederum Vorrang vor dem bedienplatzbezogenen Prioritätenmanagementmodul. Eine durch das systembezogene Prioritätenmodul festgelegte hohe Priorität für eine Applikation "Telefon" setzt die bedienplatzbezogenen Prioritätenmanagementmodule auf eine korrespondierende Priorität.

Daneben ist in diesem Ausführungsbeispiel vorgesehen, daß der Prioritätenmaster auch der zentralen Bedienplatzsteuerung 20 und dem nachfolgend beschriebenen Ressourcenmanagement übergeordnet ist.

Die möglichen Konfliktfälle zwischen den Modulen des Prioritätenmanagements sind in einer Matrix abgespeichert und durch ein allgemeines Systemkonfigurierungsmodul einstellbar. Dieses allgemeine Systemkonfigurierungsmodul weist eine Voreinstellung auf, mit der das Fahrzeugkommunikationssystem an einen Endkunden ausgeliefert wird. Es können ab Werk mehrere zusätzliche Voreinstellungen bereitgestellt werden, so daß ein Benutzer die Möglichkeit hat, zwischen mehreren typischen Möglichkeiten zu wählen, ohne selber eine Konfigurierung vornehmen zu müssen.

So kann in einer Voreinstellung vorgesehen sein, daß der Fahrzeugführer sowohl optische als auch akustische Leitinformationen vom Navigationsgerät 2 erhält. In einer anderen Voreinstellung kann vorgesehen sein, daß der Fahrzeugführer nur akustische Leitinformationen bereitgestellt bekommt, um eine Ablenkung vom Verkehrsgeschehen zu vermeiden. Zugleich kann aber eine optische Wiedergabe einer Straßenkarte mit Leitsymbolen für einen Mitfahrer vorgesehen sein. In diesem Fall erhält der Fahrzeugführer kein Zugriffsrecht auf die optische Ausgabe des Navigationsgeräts 2.

Für jeden Bedienplatz 9 ist durch eine Bedienplatzsteuerung 20.1, 20.2 das Zusammenwirken des individuellen Bedienplatzes 9 mit dem gesamten Fahrzeugkommunikationssystem, und insbesondere der zentralen Systemsteuerung, geregelt. Ferner steuert die Bedienplatzsteuerung 20.1, 20.2 die Benutzerschnittstelle eines Bedienplatzes. Die Bedienplatzsteuerung umfaßt Module 20.2, die den einzelnen Bedienplätze 9 funktional zugeordnet sind. Diese lokalen Module 20.2 können in der zentralen Recheneinheit realisiert sein. In diesem Ausführungsbeispiel sind sie allerdings in den einzelnen Bedienplätzen realisiert und werden durch ein zentrales Modul 20.1 von der zentralen Recheneinheit 1 verwaltet, obwohl sie auch durch lokale Recheneinheiten der Bedienplätze verwaltet werden könnten.

Die Bedienplatzsteuerung eines Bedienplatzes 9 umfaßt das bedienplatzbezogene Prioritätenmanagementmodul und ein Bedienplatz-Konfigurationsmodul. Letzteres ist eine Untereinheit eines Bedienmanagements, und genauer eines Bedienmanagement-Konfigurationsmoduls.

Das Bedienmanagement weist Module auf, die der zentralen Systemsteuerung 17 funktional zugeordnet sind, und enthält Module, die der Bedienplatzsteuerung 20 funktional zugeordnet sind.

Das bedienplatzbezogene Prioritätenmanagementmodul bestimmt die Prioritäten der im Fahrzeugkommunikationssystem vorhandenen Applikationen im Hinblick auf deren Zugriffsrechte auf die Ausgabeeinrichtungen des Bedienplatzes.

Das bedienplatzbezogene Prioritätenmanagementmodul ist zwar funktional der Bedienplatzsteuerung 20 zugeordnet, steht aber dennoch in einem Unterordnungsverhältnis gegenüber dem zentralen Prioritätenmanagement 19, das funktional der zentralen Systemsteuerung 17 zugeordnet ist.

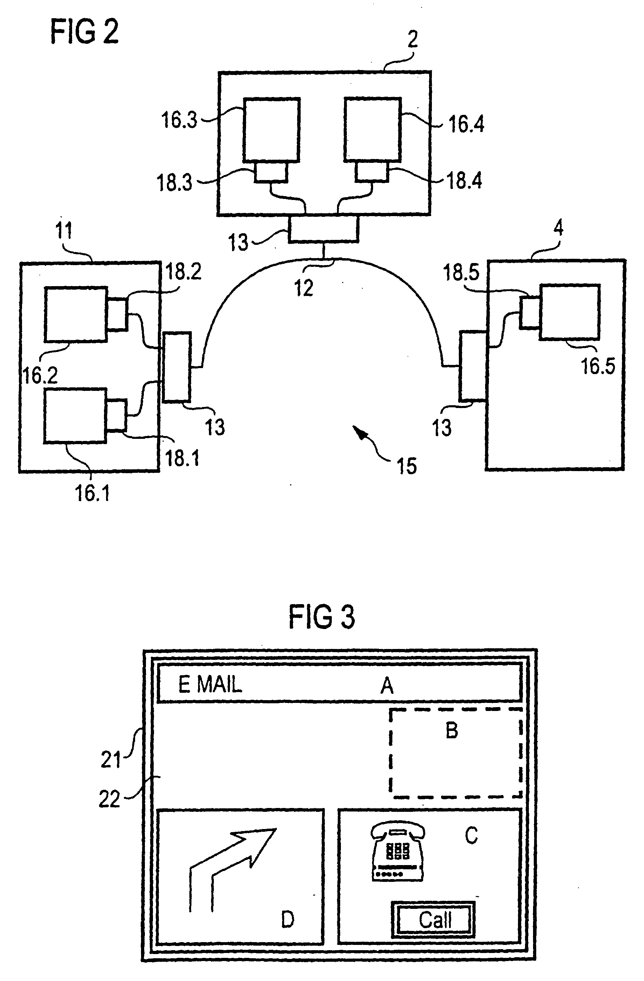

Figur 2 veranschaulicht eine Applikation 15, die auf Funktionen 16.1 bis 16.5 zurückgreift, wobei die Funktionen innerhalb verschiedener Geräte ausgeführt werden.

Die veranschaulichte Applikation 15 betrifft eine Fahrzeugnavigation. Über den Datenbus 12 sind unter anderem das Navigationsgerät 2, das Ortungsmodul 11 und das Audiosystem 4 verbunden. Die Geräte verfügen jeweils über eine Hardware-Schnittstelle 13, mit der sie physikalisch mit dem Datenbus 12 verbunden sind. Die in den Geräten realisierten Funktionen 16.1 bis 16.5 weisen jeweils eine eigene Software-Schnittstelle 18.1 bis 18.5 auf. Die Daten der Hardware-Schnittstellen 13 werden durch diese Software-Schnittstellen in Eingabeparameter für die der jeweiligen Software-Schnittstelle 18.1 bis 18.5 zugeordnete Funktion 16.1 bis 16.5 umgewandelt. Die Ausgabeparameter der entsprechenden Funktion 16.1 bis 16.5 werden durch die der jeweiligen Funktion 16.1 bis 16.5 zugeordnete Software-Schnittstelle 18.1 bis 18.5 in Daten für die anderen Software-Schnittstellen 18.1 bis 18.5 und/oder der Hardware-Schnittstellen 13 umgewandelt.

Bei Aufruf der Applikation "Navigation" stellt das mit einem Mikroprozessor ausgestatteten Navigationsgerät 2 auf einer Anzeigeeinrichtung des anfordernden Benutzers ein Startmenü bereit. Dieses Startmenü läßt sich individuell für den Bedienplatz über die Bedienplatzsteuerung konfigurieren.

Nach der Eingabe eines Zieles bestimmt die Funktion 16.3 zunächst den momentanen Standort des Fahrzeugs. Hierzu greift die Funktion 16.3 auf das Ortungsmodul 11 zu. Das Ortungsmodul 11 umfaßt eine Funktion 16.1 zur absoluten Ortsbestimmung mittels eines GPS-Empfängers und eine Funktion 16.2 zur relativen Ortsbestimmung mittels Winkelmessung und Messung der zurückgelegten Wegstrecke (Koppelnavigation). Diese Daten werden von den Funktionen 16.1 und 16.2 über die Software-Schnittstellen 18.1 und 18.2 und die Hardware-Schnittstelle 13 zum Navigationsgerät 2 übermittelt.

Nach Eingang dieser Daten fordert die Funktion 16.3 der Applikation 15 vom in Figur 2 nicht dargestellten DVD-Wiedergabegerät die für die Berechnung einer Route benötigten Wegenetzdaten an und errechnet eine geeignete Route zum Ziel.

Die Funktion 16.4 ermittelt Fahranweisungen zu der von der Funktion 16.3 ermittelten Route. Die Fahranweisungen werden von der Funktion 16.4 rechtzeitig vor jedem vom Fahrzeugführer einzuleitenden Manöver über den Datenbus 12 an das Audiosystem 4 als Sprachinformation ausgegeben. Die Funktion 16.5 des Audiosystems wandelt die-Sprachinformation in akustische Signale um, verstärkt sie und gibt sie über Lautsprecher wieder.

Zur Steuerung des Zusammenspiels zwischen den Einheiten Benutzerschnittstelle, Applikation und Funktionen weist das Fahrzeugkommunikationssystem ein Ressourcenmanagement auf. Dieses Ressourcenmanagement besteht aus einem Funktionsmanagementmodul, einem Zugriffskonflikte-Managementmodul und einem Buskapazität-Managementmodul.

Das Funktionsmanagementmodul verfügt über die Untermodule "Funktionsverfügbarkeit", "Funktionsstatus" und "Funktionsnutzungsmanagement". Zusätzlich kann ein Modul für die Konfiguration des Funktionsmanagementmoduls vorgesehen sein, um beispielsweise durch ein Ausblenden einer Funktion Tests durchführen zu können.

Das Untermodul "Funktionsverfügbarkeit" verwaltet eine Liste mit allen im Fahrzeugkommunikationssystem ausführbaren Funktionen, beispielsweise den Bedienfunktionen des DVD-Wiedergabegeräts "vorwärts", "stop", "Wiedergabe", "Pause". etc.

Im Untermodul "Funktionsstatus" ist die Art der Funktion (steuernd oder abfragend) enthalten, der Status, ob die Funktion von einer Applikation verwendet wird, von welcher Applikation die Funktion gegebenenfalls verwendet wird und von welchem Bedienplatz aus die Funktion verwendet wird. Beim Bedienplatz kann zwischen Bedienterminal (Eingabemittel) und Ausgabeeinrichtung differenziert werden. Dieses Untermodul bildet reale Systemzustände und Systemeigenschaften ab.

Das Untermodul "Funktionsnutzungsmanagement" erfaßt die potentiellen Verknüpfungsmöglichkeiten zwischen den ausführbaren Funktionen, Geräteeinheiten und Applikationen sowie die Bedienmöglichkeiten für eine bestimmte Applikation. Im Untermodul "Funktionsnutzungsmanagement" ist abgelegt, welche Datenquelle aufgrund der physikalischen Randbedingungen ihre Daten auf welche Datensenken senden kann.

Das Zugriffskonflikte-Managementmodul weist die Untermodule "Quellenzugriff", "Senkenzugriffe" und "Konfigurierung des Zugriffsmanagements" auf.

Das Zugriffskonflikte-Managementmodul meldet entstandene Konflikte an das zentrale Prioritätenmanagement. Es erfaßt also den momentanen Zustand des gesamten Fahrzeugkommunikationssystems für das Prioritätenmanagement.

Das Buskapazität-Managementmodul weist die Untermodule "Erkennen drohender Überlast", "Erkennen bestehender Konflikte" und "Konfiguration des Buskapazitäten-Managementmoduls" auf. Vom Buskapazität-Managementmodul werden die gewonnenen Ergebnisse genauso an das zentrale Prioritätenmanagement gemeldet, wie vom Zugriffskonflikte-Managementmodul. Dabei sind die Ergebnisse insbesondere für das busbezogene Prioritätenmanagement relevant.

Das Untermodul "Konfiguration des Buskapazität-Managementmoduls" erlaubt die Einstellung von Schwellwerten, beispielsweise die Schwelle für eine drohende Überlast des Datenbusses 12. Im Unterschied zu den Modulen des busbezogenen Prioritätenmanagements, die Buszugriffe handhaben, ermittelt das Buskapazität-Managementmodul lediglich die Systemgeschichte, liefert eine Abschätzung für den möglichen Folgezustand und gibt gegebenenfalls eine Meldung oder Warnung aus.

Das Ressourcenmanagement ist funktional der zentralen Systemsteuerung zugeordnet.

Figur 3 veranschaulicht die Wirkungsweise der Bedienplatzsteuerung und des Bedienmanagements.

Eine Ausgabeeinrichtung 21 eines Bedienplatzes stellt für den Benutzer eine Bedienoberfläche 22 bereit. Auf der Bedienoberfläche 22 ist ein Feld A für E-Mails, ein Feld B für Verkehrsnachrichten, ein Feld C für eingehende Telefonanrufe und ein Feld D für die Ausgabe von Leitinformation der Applikätion "Navigation" vorgesehen.

Im Feld A werden eingehende E-Mails dargestellt. Im gestrichelt dargestellten, inaktiven Feld B werden Verkehrsnachrichten angezeigt, sofern eine relevante Verkehrsmeldung im Fahrzeugkommunikationssystem eintrifft und eine Applikation oder Funktion "Stauwarnung" auf die Ausgabeeinrichtung 21 zugreift.

In Feld C leuchtet ein Auswahlelement "Call" auf, sobald ein Anruf für diesen Bedienplatz der Anzeigeeinrichtung 21 eintrifft. Der Anruf kann durch Auslösen einer Bedientaste, ein Sprachkommando oder dergleichen angenommen werden.

Das Bedienmanagement steuert die Benutzerschnittstelle. Es ordnet den einzelnen Applikationen für den einzelnen Bedienplatz jeweils ein Startmenü und einen Abschnitt auf dem Bildschirm zu, in dem sie eine Anzeige vornehmen können.

Das Bedienmanagement weist neben dem oben bereits erwähnten Bedienmanagement Konfigurationsmodul die Module "Zustandsautomat", "Ausgabe von Quelldaten" und "Zuordnung von Bedienzu Anzeigeplätzen" auf.

Das Modul "Zustandsautomat" weist die Untermodule "Zustandsautomat Gesamtsystem", "Zustandsautomat Platz 1 bis Zustandsautomat Platz N" auf. Diese Zustandsautomaten erfassen nur die realen Zustände des Fahrzeugkommunikationssystems und nicht die frei definierbaren Systemzustände.

Der "Zustandsautomat Gesamtsystem" speichert die Systemzustände (z. B. "DVD-Wiedergabegerät in Betrieb"), die Ereignisse, die einen Übergang in neue Zustände (übergangszustände) auslösen sollen und die Folgezustände, die nach ausgelösten Aktionen eintreten. Hierdurch können die festgestellten Systemzustände mit den Masken der Benutzerschnittstelle oder den an den Benutzer auszugebenden Informationen verknüpft werden.

Die Zustandsautomaten der Plätze 1 bis N erfassen die relevante Geschichte eines Bedienvorgangs und die Applikationen, die gerade von dem betreffenden Bedienplatz aus bedient werden. Außerdem sind alle im Fahrzeugkommunikationssystem verfügbaren Bedienmöglichkeiten hinterlegt.

Das Bedienmanagement-Konfigurationsmodul weist die Untermodule "Gesamtsystem-Konfiguration", "Bedienplatz-Konfiguration Platz 1" bis "Bedienplatz-Konfiguration Platz N" auf. Diese Module betreffen ausschließlich frei definierbare Systemzustände.

Die Konfigurationsmodule dienen der Einstellung der Bedienoberfläche und der Bedienmenüs. Es kann eingestellt werden, welcher Startbildschirm und welches Startmenü angezeigt wird sowie die Art der vom Benutzer gewünschten Bedienung. Letztere kann unterschieden werden nach "Fortgeschrittenen-Bedienung", "Anfängerbedienung" oder "kindgerechte Bedienung". Dabei kann mit dem Bedienplatz Konfigurationsmodul Platz N" die Konfiguration individuell für den Bedienplatz N vorgenommen werden.

Das Modul "Ausgabe von Quelldaten" stellt die Verbindung zwischen den Eingaben eines Benutzers und den Quelldaten her, die am Bedienplatz ausgegeben werden und beispielsweise über den Datenbus ankommen. Die Quelldaten sollen regelmäßig für den Benutzer angezeigt werden. Die Organisation einer Anzeige zusammen mit dem entsprechenden Bedienmenü oder alternativ zu diesem Bedienmenü wird von diesem Modul bewirkt. Es erfolgt also eine Verknüpfung von Quelldaten mit konfigurierbaren Bedienmenüs.

Um die Bedienterminals zu Anzeigeplätzen zuzuordnen greift das Modul "Zuordnung von Bedien- zu Anzeigeplätzen" auf das Untermodul "Funktionsnutzungsmanagement" des Funktionsmangementmoduls des Ressourcenmanagements zurück. Hierdurch ist gewährleistet, daß nur eine Auswahl von sinnvollen Kombinationsmöglichkeiten für den Benutzer.bereitgestellt werden. Die Auslieferung des Fahrzeugkommunikationssystems ab Werk erfolgt mit einer Grundeinstellung für die Zuordnung der Bedienterminals zu den Ausgabeeinrichtungen.

Außerdem kann durch das Modul "Zuordnung von Bedien- zu Anzeigeplätzen" eine Fernbedienung einem bestimmten Bedienplatz zugeordnet werden.

## Patentansprüche

1. Fahrzeugkommunikationssystem, das aufweist:
- wenigstens eine im Fahrzeug angeordnete Recheneinheit (1) zum Steuern von Applikationen (15),
- mehrere unterschiedliche, mit der Recheneinheit (1) verbundene Datenquellen (2, 4, 5, 6, 8), und
- mehrere mit der Recheneinheit (1) verbundene Bedienplätze (9) mit Benutzerschnittstellen zum Zugriff auf die Applikationen (9) und zur Datenwiedergabe,
dadurch genkenngeichnet, daß das Fahrzeugkommunikationssystem eine in der wenigstens einen Recheneinheit (1) realisierte zentrale Systemsteuerung (17) mit einem Prioritätenmanagement (19), das den einzelnen Bedienplätzen (9) Zugriffsrechte unterschiedlicher Priorität auf die Applikationen (15) einräumt, aufweist.

2. Fahrzeugkommunikationssystem nach Anspruch 1, **dadurch gekennzeichnet, daß** den Applikationen (15) Funktionen (16) zugeordnet sind, die auf der Recheneinheit (1) oder auf einer Datenquelle (2, 4, 5, 6, 8) implementiert sind.

3. Fahrzeugkommunikationssystem nach einem der vorhergehenden Ansprüche, **gekennzeichnet durch** eine Bedienplatzsteuerung (20.1, 20.2), mit der die einzelnen Bedienplätze (9) individuell konfigurierbar sind.

4. Fahrzeugkommunikationssystem nach dem vorhergehenden Anspruch, **dadurch gekennzeichnet, daß** das Prioritätenmanagement (19) den Applikationen (15) individuelle Zugriffsrechte auf einen Datenbus (12) und oder die Recheneinheit (1) einräumt.

5. Fahrzeugkommunikationssystem nach dem vorhergehenden Anspruch, **dadurch gekennzeichnet, daß** das Prioritätenmanagement (19) den Applikationen (15) Zugriff auf den Datenbus (12) in Abhängigkeit von der gegenwärtigen Belastung des Datenbusses (12) einräumt.

6. Fahrzeugkommunikationssystem nach einem der Ansprüche 4 oder 5, **dadurch gekennzeichnet, daß** bei Erreichen oder Überschreiten einer definierten Belastung des Datenbusses (12) wenigstens eine niederrangige Applikation abbrechbar ist oder deren Datenübertragungsrate reduzierbar ist.

7. Fahrzeugkommunikationssystem nach einem der Ansprüche 4 bis 6, **dadurch gekennzeichnet, daß** der Zugriff einer Applikation (15) auf den Datenbus (12) in Abhängigkeit von der Priorität des anfordernden Bedienplatzes (9) steuerbar ist.

8. Fahrzeugkommunikationssystem nach einem der vorhergehenden Ansprüche, **dadurch gekennzeichnet, daß** die Bedienplatzsteuerung (20.1, 20.2) den Applikationen (15) für den Zugriff auf einen Bedienplatz (9) individuelle Zugriffsrechte einräumt.

9. Fahrzeugkommunikationssystem nach einem der vorhergehenden Ansprüche, **dadurch gekennzeichnet, daß** durch die Bedienplatzsteuerung (20.1, 20.2) eine Bedienoberfläche (22) eines Bedienplatzes (9) individuell konfigurierbar ist.

10. Verfahren zum Austausch von Daten in einem Fahrzeug, bei dem wenigstens eine Recheneinheit (1) und mehrere Datenquellen (2, 4, 5, 6, 8) über einen Datenbus (12) mit Bedienplätzen (9) kommunizieren, wobei
- von der Recheneinheit (1) gleichzeitig unterschiedliche Applikationen (15) zur Ausgabe auf unterschiedlichen Ausgabeeinrichtungen (21) gesteuert werden,
- den Bedienplätzen (9) Zugriffsrechte auf die Applikationen (15) eingeräumt werden,
- den einzelnen Bedienplätzen (9) Zugriffsrechte unterschiedlicher Priorität auf die Applikationen (15) eingeräumt werden.

11. Verfahren nach dem vorhergehenden Anspruch, **dadurch gekennzeichnet, daß** eine Bedienplatzsteuerung (20.1, 20.2) eine oder mehrere der folgenden Aufgaben individuell für einen Bedienplatz (9) steuert:
- eine Benutzerführung an der Mensch-Maschine-Schnittstelle,
- eine Zuordnung von laufenden Applikationen oder deren Menüs auf definierte Positionen einer Anzeigeeinrichtung,
- eine Zuordnung des Zugriffsrechts von Applikationen auf eine Ausgabeeinrichtung des Bedienplatzes.

## Claims

1. Vehicle communication system which has:
- at least one processor unit (1), arranged in the vehicle, for controlling applications (15),
- a plurality of different data sources (2, 4, 5, 6, 8) which are connected to the processor unit (1), and
- a plurality of operator consoles (9) which are connected to the processor unit (1) and have user interfaces for accessing the applications (9) and for data playback,
**characterized in that** the vehicle communication system has a central system controller (17), which is implemented in the at least one processor unit (1), having a priority management system (19) which allocates, to the individual operator consoles (9), access rights with different degrees of priority to the applications (15).

2. Vehicle communication system according to Claim 1, **characterized in that** functions (16) which are implemented on the processor unit (1) or on a data source (2, 4, 5, 6, 8) are assigned to the applications (15).

3. Vehicle communication system according to one of the preceding claims, **characterized by** an operator console controller (20.1, 20.2) with which the individual operator consoles (9) can be individually configured.

4. Vehicle communication system according to the preceding claim, **characterized in that** the priority management system (19) allocates to the applications (15) individual access rights to a data bus (12) and/or to the processor unit (1).

5. Vehicle communication system according to the preceding claim, **characterized in that** the priority management system (19) allocates to the applications (15) access to the data bus (12) as a function of the loading of the data bus (12) at that time.

6. Vehicle communication system according to one of Claims 4 or 5, **characterized in that** when a defined load of the data bus (12) is reached or exceeded, at least one low-level application can be aborted or its data transmission rate can be reduced.

7. Vehicle communication system according to one of Claims 4 to 6, **characterized in that** the access of an application (15) to the data bus (12) can be controlled as a function of the priority of the requesting operator console (9).

8. Vehicle communication system according to one of the preceding claims, **characterized in that** the operator console controller (20.1, 20.2) allocates individual access rights to the applications (15) for the access to an operator console (9).

9. Vehicle communication system according to one of the preceding claims, **characterized in that** a user interface (22) of an operator console (9) can be configured individually by the operator console controller (20.1, 20.2).

10. Method for exchanging data in a vehicle, in which at least one processor unit (1) and a plurality of data sources (2, 4, 5, 6, 8) communicate with operator consoles (9) via a data bus (12),
- different applications (15) being controlled by the processor unit (1) so that they output onto different output devices (21),
- access rights to the applications (15) being allocated to the operator consoles (9),
- access rights with different degrees of priority to the applications (15) being allocated to the individual operator consoles (9).

11. Method according to the preceding claim, **characterized in that** an operator console controller (20.1, 20.2) controls one or more of the following functions individually for an operator console (9):
- user prompting at the man/machine interface,
- assignment of running applications or their menus to defined positions of a display device,
- assignment of the access right of applications to an output device of the operator console.

## Revendications

1. Système de communication pour véhicule comportant:
- au moins une unité d'ordinateur (1) montée dans le véhicule et permettant de contrôler des applications (15),
- plusieurs sources de données différentes (2, 4, 5, 6, 8) reliées à l'unité d'ordinateur (1 ) et
- plusieurs consoles de commande (9) reliées à l'unité d'ordinateur (1) et équipées d'interfaces utilisateur permettant l'accès aux applications (9) et la reproduction de données
**caractérisé par le fait que** le système de communication pour véhicule comporte une commande centralisée du système (17) réalisée dans la au moins une unité d'ordinateur (1) et comportant une gestion de priorités (19) qui accorde, aux différentes consoles de commande (9), des droits d'accès de priorités différentes aux applications (15).

2. Système de communication pour véhicule selon la revendication 1 **caractérisé par le fait que** des fonctions (16), implémentées sur l'unité d'ordinateur (1) ou sur une source de données (2, 4, 5, 6, 8), sont affectées aux applications (15).

3. Système de communication pour véhicule selon l'une des revendications précédentes **caractérisé par** une commande de console de commande (20.1, 20.2), avec laquelle les différentes consoles de commande (9) peuvent être configurées individuellement.

4. Système de communication pour véhicule selon l'une des revendications précédentes **caractérisé par le fait que** la gestion des priorités (19) accorde aux applications (15) des droits d'accès individuels à un bus de données (12) et/ou à l'unité d'ordinateur (1 ).

5. Système de communication pour véhicule selon l'une des revendications précédentes **caractérisé par le fait que** la gestion des priorités (19) accorde aux applications (15) l'accès au bus de données (12) en fonction de la charge momentanée du bus de données (12).

6. Système de communication pour véhicule selon l'une des revendications 4 ou 5 **caractérisé par le fait que**, lorsqu'une charge définie du bus de données (12) est atteinte ou dépassée, au moins une application de rang inférieur peut être interrompue ou son débit de transmission de données peut être réduit.

7. Système de communication pour véhicule selon l'une des revendications 4 à 6 **caractérisé par le fait que** l'accès d'une application (15) au bus de données (12) peut être commandé en fonction de la priorité de la console de commande (9) sollicitée.

8. Système de communication pour véhicule selon l'une des revendications précédentes **caractérisé par le fait que** la commande des consoles de commande (20.1, 20.2) accorde aux applications (15) des droits d'accès individuels pour l'accès à une console de commande (9).

9. Système de communication pour véhicule selon l'une des revendications précédentes **caractérisé par le fait que**, grâce à la commande des consoles de commande (20.1, 20.2), il est possible de configurer individuellement une interface utilisateur (22) d'une console de commande (9).

10. Procédé permettant un échange de données dans un véhicule, dans lequel au moins une unité d'ordinateur (1) et plusieurs sources de données (2, 4, 5, 6, 8) communiquent, par l'intermédiaire d'un bus de données (12), avec des consoles de commande (9),
- l'unité d'ordinateur (1) commandant simultanément des applications différentes (15) pour permettre une édition sur différents dispositifs d'édition (21),
- des droits d'accès aux applications (15) étant accordés aux consoles de commande (9),
- des droits d'accès aux applications (15), de priorités différentes, étant accordés aux différentes consoles de commande (9).

11. Procédé selon la revendication précédente **caractérisé par le fait qu'**une commande de console de commande (20.1, 20.2) contrôle, individuellement pour une console de commande (9), une ou plusieurs des tâches suivantes:
- une aide en ligne de l'utilisateur au niveau de l'interface homme-machine,
- une affectation d'applications en cours ou de leurs menus sur des positions définies d'un dispositif d'affichage,
- une affectation du droit d'accès d'applications à un dispositif d'édition de la console de commande.
